(19) Europäisches Patentamt
European Patent Office
Office européen des brevets

(11) EP 0 799 682 A2

(12) **EUROPÄISCHE PATENTANMELDUNG**

(43) Veröffentlichungstag:
**08.10.1997 Patentblatt 1997/41**

(21) Anmeldenummer: **97810172.3**

(22) Anmeldetag: **24.03.1997**

(51) Int Cl.6: **B29C 43/00**, B29C 67/24, C08G 59/68, C08L 63/00, H01B 3/40

(84) Benannte Vertragsstaaten:
**CH DE ES FR GB IT LI**

(30) Priorität: **04.04.1996 CH 873/96**

(71) Anmelder: **Ciba Specialty Chemicals Holding Inc.
4057 Basel (CH)**

(72) Erfinder:
- **Behm, Dean Tallak
4132 Muttenz (CH)**
- **Flury, Peter
4204 Himmelried (CH)**
- **Kainmüller, Thomas
79576 Weil am Rhein (DE)**

(54) **Herstellung von Formkörpern aus Epoxidharzen mit Hilfe der automatischen Druckgeliertechnik**

(57) Ein Verfahren zur Herstellung von Formkörpern mit Hilfe der automatischen Druckgeliertechnik, bei dem eine härtbare Zusammensetzung, die zumindest eine Epoxidverbindung mit durchschnittlich mehr als einer Epoxidgruppe pro Molekül und einen Initiator für die kationische Polymerisation enthält, auf eine Temperatur von 30 bis 55 °C erwärmt und in eine Form eingebracht wird, die eine Temperatur von 80 bis 120°C aufweist, die hoch genug ist, um eine thermische Härtung der Zusammensetzung einzuleiten, und die Zusammensetzung unter Härtung so lange in dieser Form verbleibt, bis der Formkörper so weit verfestigt ist, dass er entformt werden kann, wobei während der Härtung der Formkörper ständig unter Druck so viel der härtbaren Zusammensetzung in die Form nachgeführt wird, dass die Schrumpfung der härtenden Zusammensetzung ausgeglichen wird und wobei die härtbare Zusammensetzung als Initiator für die kationische Polymerisation mindestens eine Verbindung enthält, ausgewählt aus:

a) Sulfoniumverbindungen der Anionen $PF_6^-$, $AsF_6^-$, $SbF_6^-$, $BiF_6^-$ und der von diesen Anionen abgeleiteten Derivate, worin zumindest ein Fluoratom durch eine Hydroxylgruppe ersetzt ist, sowie des Anions $CF_3SO_3^-$, wobei die Sulfoniumverbindungen mindestens eine mit dem Schwefelatom verbundene Alkylgruppe mit 1 bis 12 Kohlenstoffatomen, Cycloalkylgruppe mit 3 bis 8 Kohlenstoffatomen, (Cycloalkyl)alkylgruppe mit 4 bis 10 Kohlenstoffatomen oder Aralkylgruppe mit 7 bis 15 Kohlenstoffatomen aufweisen, sowie
b) Verbindungen der Formel (I)

$$[M^{+n}(L)_x]^{n+}\ n\ X^- \qquad (I),$$

worin die Symbole spezielle, im Text näher beschriebene Bedeutung haben, führt zu Formkörpern, die keine inneren Sprünge, Risse oder ähnliche Fehler aufweisen.

EP 0 799 682 A2

**Beschreibung**

Die vorliegende Erfindung betrifft ein Verfahren zur Herstellung eines Formkörpers mit Hilfe der automatischen Druckgeliertechnik unter Verwendung einer härtbaren Epoxidharzzusammensetzung.

Bei der Herstellung von Formkörpern nach dieser Technik, die seit längerem bekannt ist, wird die härtbare Epoxidharzzusammensetzung zunächst, falls erforderlich, durch Erwärmung verflüssigt und dann in eine Form eingebracht, die eine Temperatur aufweist, die hoch genug ist, um eine thermische Härtung der Zusammensetzung einzuleiten. In dieser Form verbleibt die Zusammensetzung, bis der Formkörper so ausreichend gehärtet und verfestigt ist, dass er entformt werden kann, wobei während der Härtung des Formkörpers ständig unter Druck soviel der härtbaren Zusammensetzung in die Form nachgeführt wird, dass die Volumenabnahme des Formkörpers während der Härtung ausgeglichen wird. Häufig werden für das geschilderte Verfahren Zusammensetzungen, die neben dem Epoxidharz einen Anhydridhärter und gegebenenfalls einen Härtungsbeschleuniger enthalten, als härtbares Material eingesetzt.

W. Ferng, D. Baumann, H. Lehmann und Y. Naganuma beschreiben in "CATIONIC EPOXY MOLDED ELECTRONIC (CEMTRONIC) TECHNOLOGY AND ITS APPLICATIONS" (Vortrag bei der SPI-Epoxy Resin Formulators Conference, 20.-22. 9. 1995 in Orlando, FL, U. S. A.) die Herstellung von Formkörpern mit Hilfe der automatischen Druckgeliertechnik und verwenden hierbei eine härtbare Zusammensetzung, die neben einem Diglycidylether auf Basis von Bisphenol A einen Initiator für die kationische Polymerisation des Epoxidharzes, und zwar eine aromatische Sulfoniumhexafluoroantimönatverbindung, enthält. Diese Zusammensetzung wird auf ca. 45 °C erwärmt und innerhalb von 30 Sekunden einer 135 bis 140 °C heissen Form zugeführt, in der das Material weitere 2 Minuten verbleibt. Danach wird es entformt. Die geschilderte Verfahrensweise hat gegenüber der entsprechenden Herstellung von Formkörpern mit Hilfe der weiter oben erwähnten Epoxidharzzusammensetzungen auf Basis von Anhydridhärtern unter anderem den Vorteil, dass der Energieverbrauch stark reduziert ist, weil die Formkörper bei vergleichbarer Temperatur der Form nur etwa ein Fünftel der Zeit benötigen, bis sie der Form wieder entnommen werden können. Die Massenproduktion von Formkörpern wird hierdurch erheblich ökonomischer. Allerdings kann das beschriebene Verfahren noch nicht gänzlich befriedigen, da sich -insbesondere bei grösseren Formkörpern- leicht Risse im Material des Formkörpers bilden.

Es wurde nunmehr gefunden, dass die Gefahr der Bildung von Rissen auch bei Verwendung härtbarer Zusammensetzungen auf Basis von Epoxidharzen und Initiatoren für die kationische Polymerisation für die automatische Druckgelierung praktisch nicht mehr besteht, wenn man die Form auf höchstens 120°C erhitzt. Diese Temperatursenkung führt zwar im Vergleich zu der im Vorabschnitt beschriebenen herkömmlichen Verfahrensweise wieder zu etwas längeren Verweilzeiten des härtbaren Materials in der Form, aufgrund der wesentlich niedrigeren Temperatur der Form ist aber der Energieverbrauch für die Härtung dennoch vergleichbar gering wie bei der im Vorabschnitt beschriebenen Verfahrensweise.

Gegenstand der Erfindung ist somit ein Verfahren zur Herstellung eines Formkörpers mit Hilfe der automatischen Druckgeliertechnik, bei dem eine härtbare Zusammensetzung, die zumindest eine Epoxidverbindung mit durchschnittlich mehr als einer Epoxidgruppe pro Molekül und einen Initiator für die kationische Polymerisation enthält, auf eine Temperatur von 30 bis 55 °C erwärmt und in eine Form eingebracht wird, die eine Temperatur von 80 bis 120°C aufweist, die hoch genug ist, um eine thermische Härtung der Zusammensetzung einzuleiten, und die Zusammensetzung unter Härtung so lange in dieser Form verbleibt, bis der Formkörper so weit verfestigt ist, dass er entformt werden kann, wobei während der Härtung des Formkörpers ständig unter Druck so viel der härtbaren Zusammensetzung in die Form nachgeführt wird, dass die Schrumpfung der härtenden Zusammensetzung ausgeglichen wird und wobei die härtbare Zusammensetzung als Initiator für die kationische Polymerisation mindestens eine Verbindung enthält, ausgewählt aus

a) Sulfoniumverbindungen der Anionen $PF_6^-$, $AsF_6^-$, $SbF_6^-$, $BiF_6^-$ und der von diesen Anionen abgeleiteten Derivate, worin zumindest ein Fluoratom durch eine Hydroxylgruppe ersetzt ist, sowie des Anions $CF_3SO_3^-$, wobei die Sulfoniumverbindungen mindestens eine mit dem Schwefelatom verbundene Alkylgruppe mit 1 bis 12 Kohlenstoffatomen, Cycloalkylgruppe mit 3 bis 8 Kohlenstoffatomen, (Cycloalkyl)alkylgruppe mit 4 bis 10 Kohlenstoffatomen oder Aralkylgruppe mit 7 bis 15 Kohlenstoffatomen aufweisen, sowie

b) Verbindungen der Formel (I)

$$[M^{+n}(L)_x]^{n+}\ nX^- \qquad (I),$$

worin

n gleich 2 oder 3 ist,

M ein Metallkation ausgewählt aus der Gruppe bestehend aus $Zn^{2+}$, $Mg^{2+}$, $Fe^{2+}$, $Co^{2+}$, $Ni^{2+}$, $Cr^{2+}$, $Ru^{2+}$,

$Mn^{2+}$, $Sn^{2+}$, $VO^{2+}$, $Fe^{3+}$, $Al^{3+}$ und $Co^{3+}$ darstellt,

$X^-$ ein Anion ist, das ausgewählt wird aus der Gruppe bestehend aus $PF_6^-$, $AsF_6^-$, $SbF_6^-$, $BiF_6^-$, von diesen Anionen abgeleiteten Derivaten, worin zumindest ein Fluoratom durch eine Hydroxylgruppe ersetzt ist, und $CF_3SO_3^-$, oder worin bis zu 50 % der Anionen $X^-$, bezogen auf die Gesamtmenge der Anionen, auch beliebige Anionen sein können,

L Wasser oder ein organischer σ-Donorligand ist, der als Ligandenstellen ein oder mehrere funktionelle Reste ausgewählt aus der Gruppe bestehend aus -CO-,-CO-O-, -O-CO-O- oder -O- aufweist, und der über das Sauerstoffatom oder über die Sauerstoffatome mit dem Zentralatom σ-Bindungen ausbildet und

x eine ganze Zahl von 0 bis 6 bedeutet,

wobei die Liganden L im Rahmen der gegebenen Definitionen unterschiedlich sein können.

Im allgemeinen ist bei Durchführung des erfindungsgemässen Verfahrens eine Verweildauer des zu härtenden Materials in der Form von 1 bis maximal etwa 10 Minuten ausreichend, bevorzugt verbleibt das zu härtende Material 3 bis 8 Minuten in der Form. Die Temperatur der Form beträgt bevorzugt nur 85 bis 100 °C.

Zweckmässigerweise wird der Formkörper nach der Entformung einer thermischen Nachhärtung unterzogen, um für eine vollständige Aushärtung der Formkörper zu sorgen. Die Nachhärtung erfolgt bevorzugt während maximal 5 Stunden, insbesondere während 0,5 bis 2 Stunden, und bei einer Temperatur von 120 bis 200 °C, insbesondere bei einer Temperatur von 130 bis 150 °C.

Die für das erfindungsgemässe Verfahren geeignete Initiatoren für die kationische Polymerisation der Epoxidharze sind bekannt. Die Initatoren der Formel (I) sind unter anderem in der EP-A-0 388 837 beschrieben, deren Beschreibung als ein Bestandteil der vorliegenden Beschreibung betrachtet wird. Die Erläuterungen, die in diesem Dokument zu Bevorzugungen von Verbindungen der Formel (I) gegeben werden, gelten im allgemeinen auch für die vorliegende Erfindung. Einen für das erfindungsgemässe Verfahren ganz besonders geeigneten Härtungsinitiator der Formel (I) stellt jedoch eine beispielsweise 40-bis 50-gewichtsprozentige Lösung von Zinktetrafluoroborat in Tetrahydrofurfurylalkohol dar.

Besonders vorteilhaft für das erfindungsgemässe Verfahren sind jedoch härtbare Epoxidharzzusammensetzungen, die als Härtungsinitiator einen der oben genannten Sulfoniumverbindungen enthalten.

Entsprechende Sulfoniumverbindungen sind z. B. in der EP-A-0 580 552 und insbesondere in der EP-A-0 379 464 beschrieben. Erfindungsgemäss besonders bevorzugte Sulfoniuminitiatoren sind die in dem letztgenannten Dokument beschriebenen

Sulfoniumverbindungen der nachstehenden Formeln (II) oder (III):

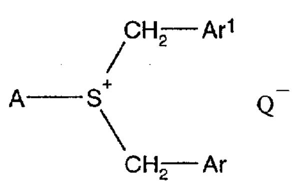 (II) 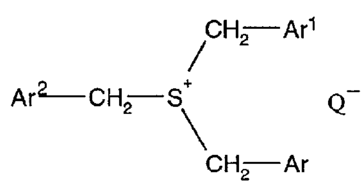 (III),

worin

A für eine Gruppe ausgewählt aus $C_1$-$C_{12}$-Alkyl, $C_3$-$C_8$-Cycloalkyl,
$C_4$-$C_{10}$-(Cycloalkyl)alkyl, unsubstituiertes Phenyl oder durch $C_1$-$C_8$-Alkyl, $C_1$-$C_4$-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht;

Ar, $Ar_1$ und $Ar_2$ unabhängig voneinander je ein unsubstituiertes Phenyl oder Naphthyl oder durch $C_1$-$C_8$-Alkyl, $C_1$-$C_4$-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder Naphthyl bedeuten und

$Q^-$ für $SbF_6^-$, $AsF_6^-$ oder $SbF_5OH^-$ steht.

Hiervon sind wiederum die Sulfoniuminitiatoren besonders bevorzugt, worin A ein $C_1$-$C_{12}$-Alkyl oder ein unsubstituiertes oder durch Halogen oder $C_1$-$C_4$-Alkyl substituiertes Phenyl bedeutet, Ar, $Ar_1$ und $Ar_2$ unabhängig voneinander je ein unsubstituiertes oder durch $C_1$-$C_4$-Alkyl, $C_1$-$C_4$-Alkoxy, Cl oder Br einfach oder mehrfach substituiertes Phenyl bedeuten und $Q^-$ für $SbF_5OH^-$ oder insbesondere für $AsF_6^-$ oder $SbF_6^-$ steht. Ganz besonders bevorzugt werden die Dibenzylphenylsulfoniumsalze der letzteren Anionen, insbesondere Dibenzylphenylsulfoniumhexafluoroantimonat.

Der Initiator wird gewöhnlich als Lösung oder Dispersion in einem inerten Lösungs- oder Dispersionsmittel eingesetzt, wobei die Lösung oder Dispersion den Initiator z. B. in einer Konzentration von 5 bis 50 Gew.-%, bevorzugt von 5 bis 20 Gew.-%, enthält. Bevorzugte Lösungsmittel sind die Diester aromatischer Dicarbonsäuren, insbesondere Dibutylphthalat.

Als Epoxidharze können praktisch sämliche bekannten polyfunktionellen Epoxide eingesetzt werden, die man -gegebenenfalls unter Einsatz von Verdünnungsmitteln- bei Temperaturen verflüssigen kann, die unterhalb der Temperatur liegen, wo der Initiator bereits eine merkliche Härtung hervorruft. Diese Polyepoxide können aliphatische, cycloaliphatische oder aromatische Verbindungen sein. Beispiele für solche Verbindungen sind die Glycidylether und β-Methylglycidylether aliphatischer oder cycloaliphatischer Diole oder Polyole, zum Beispiel solche des Ethylenglykols, Propan-1,2-diols, Propan-1,3-diols, Butan1,4-diols, Diethylenglykols, Polyethylenglykols, Polypropylenglykols, Glycerins, Trimethylolpropans oder 1,4-Dimethylolcyclohexans oder des 2,2-Bis-(4-hydroxycyclohexyl)propans, die Glycidylether von Di- und Polyphenolen, beispielsweise Resorcin, 4,4'Dihydroxydiphenylmethan, 4,4'-Dihydroxydiphenyl-2,2-propan, Novolake und 1,1,2,2Tetrakis-(4-hydroxyphenyl)-ethan.

Weitere Glycidylverbindungen mit technischer Bedeutung sind die Glycidylester von Carbonsäuren, insbesondere Di- und Polycarbonsäuren. Beispiele dafür sind die Glycidylester der Bernsteinsäure, Adipinsäure, Azelainsäure, Sebacinsäure, Phthalsäure, Terephthalsäure, Tetra- und Hexahydrophthalsäure, Isophthalsäure oder Trimellitsäure, oder von dimerisierten Fettsäuren.

Beispiele für andere Polyepoxide als Glycidylverbindungen sind die cycloaliphatischen Epoxidharze, d. h. die Epoxidierungsprodukte von Cycloalkenen, wie z. B. die Diepoxide des Vinylcyclohexens und Dicyclopentadiens, 3-(3',4'-Epoxicyclohexyl)-8,9-epoxy-2,4dioxaspiro[5.5]undecan oder der 3',4'-Epoxicyclohexylmethylester der 3,4-Epoxicyclohexancarbonsäure, oder Butadiendiepoxid oder Isoprendiepoxid, epoxidierte Linolsäurederivate oder epoxidiertes Polybutadien. Cycloaliphatische Epoxidharze sind besonders reaktiv und gehören daher zu den erfindungsgemäss bevorzugten Epoxidharzen, insbesondere der 3',4'-Epoxicyclohexylmethylester der 3,4-Epoxicyclohexancarbonsäure.

Ganz besonders bevorzugte Epoxidharze sind weiterhin gegebenenfalls vorverlängerte Diglycidylether zweiwertiger Phenole oder zweiwertiger aliphatischer Alkohole mit 2 bis 4 Kohlenstoffatomen.

Ganz besonders bevorzugt werden für die vorliegende Erfindung die gegebenenfalls vorverlängerten Diglycidylether des 2,2-Bis-(4-hydroxyphenyl)-propans (Bisphenol A) und Bis-(4-hydroxyphenyl)-methans (Bisphenol F) oder ein Gemisch aus diesen Epoxidharzen.

Die in dem erfindungsgemässen Verfahren eingesetzten Zusammensetzungen enthalten im allgemeinen 0,05 bis 20 Gew.-% des Initiators für die kationische Polymerisation, bezogen auf das Epoxidharz, bevorzugt 0,2 bis 15, insbesondere 0,2 - 5 Gew.-%.

Weiterhin enthalten die Zusammensetzungen bevorzugt Füllstoffe. Je nach dem Zweck, der durch den Füllstoffeinsatz erreicht werden soll, kann eine breite Auswahl von Füllstoffen eingesetzt werden, z. B. Talkum, Kaolin, Glimmer, Gips, Titandioxid, Quarzmehl, Cellulose, Tonerde, gemahlener Dolomit, Glaspulver, Glaskugeln, Xonotlit, Wollastonit, Kieselerde mit grosser spezifischer Oberfläche (z. B. Aerosil®), Magnesiumoxid und -hydroxid,

Aluminiumoxid oder Aluminiumoxidtrihydrat, Antimontrioxid oder Verstärkungsmittel, wie Glasfasern und sonstige Fasern, die auch zerkleinert, z. B:vermahlen sein können. Selbstverständlich sollten die Füllstoffe verträglich mit den übrigen Komponenten der Zusammensetzung sein und sollten bevorzugt den Polymerisationsinitiator gar oder zumindest nicht zu stark hemmen. Die Füllstoffe haben zweckmässigerweise eine Korngrösse von 10 bis 3000 µm, bevorzugt von 50 bis 1000 µm und können im allgemeinen auch in grosser Menge, z. B. in einer Menge von bis zu 80 Gew.-%, bezogen auf die Gesamtmenge der Epoxidzusammensetzung, verwendet werden. Grössere Mengen an Füllstoffen sind von Vorteil, da sie zu einer weniger exothermen Härtungsreaktion, geringerer Schrumpfung während der Härtung und zu einem härteren Formkörper mit guten mechanischen Eigenschaften führen. Sie führen aber unter Umständen zu einer unvorteilhaft hohen Viskosität der Epoxidharzzusammensetzungen. Bevorzugt beträgt die Viskosität der für das erfindungsgemässe Verfahren eingesetzten härtbaren Epoxidzusammensetzungen höchstens 25 Pa s bei 50 °C. Gute Ergebnisse enthält man z. B. bei Verwendung von 30 bis 75 Gew.-%, bevorzugt von 50 bis 75 Gew.-% Füllstoff, bezogen auf die Gesamtmenge der Epoxidzusammensetzung.

Die Epoxidharzzusammensetzungen für die vorliegende Erfindung können auch übliche Reaktivverdünner für Epoxidharze enthalten, z. B. Epoxidharze, die bei Temperaturen von 15 bis 30 °C flüssig sind, beispielsweise in einer Menge von 1 bis 100 Gew.-%, bezogen auf das restliche Epoxidharz in der Zusammensetzung. Es kann sich bei den Reaktivverdünnern aber auch um Verbindungen mit anderen funktionellen Gruppen als Epoxidgruppen handeln, z. B. um Polyethylenglykole oder Polypropylenglykole. Solche Verbindungen werden bevorzugt in einer Menge von 1 bis 20 Gew.-%, bezogen auf das Epoxidharz in der Zusammensetzung, eingesetzt.

Weiterhin können die erfindungsgemässen Zusammensetzungen bei Bedarf Zähigkeitsvermittler (sogenannte "toughening agents") enthalten, insbesondere Core/Shell-Polymere. Bevorzugte Core/Shell-Polymere sind z. B. in der EP-A-0 578 613 , der EP-A-0 449 776 oder dem US-Patent US-A-4,778,851 beschrieben. Sie werden bevorzugt in einer Menge 1 bis 20 Gew.-%, bezogen auf die Gesamtmenge Epoxidharz in der Zusammensetzung, eingesetzt.

Schliesslich können die Epoxidharzzusammensetzungen auch andere bekannte und üblicherweise in der Technik polymerisierbarer Materialien eingesetzte Zusatzstoffe enthalten. Beispiele für solche Zusatzstoffe sind Coinitiatoren,

z. B. sekundäre oder tertiäre Diole, weiterhin Pigmente, Farbstoffe, gepulvertes Polyvinylchlorid, Polyolefine, Metallpulver, wie Kupfer-, Silber-, Aluminium- oder Eisenpulver, Schaumhemmer, Antistatika, Verlaufsmittel, Haftvermittler für die Füllstoffe, wie Silan- oder Organotitanatverbindungen, Antioxydantien und Lichtschutzmittel. Diese Additive werden in üblichen Mengen eingesetzt, bevorzugt in Mengen bis zu 1,5 Gew.-%, bezogen auf das Harz.

Die geschilderten Epoxidharzzusammensetzungen werden zweckmässig in Form mehrerer, insbesondere zweier Komponenten eingesetzt, wobei die Epoxidgruppen enthaltenden Bestandteile der Zusammensetzung einerseits sowie der Polymerisationsinitator und gegebenenfalls andere mit Epoxidgruppen reaktive Bestandteile andererseits bevorzugt in verschiedenen Komponenten enthalten sind. Bestimmte, insbesondere inerte Bestandteile, wie die Füllstoffe, können -je nach Menge- auch auf mehrere der Komponenten verteilt werden. Die genannten Komponenten werden gemeinsam oder bevorzugt getrennt auf die Temperatur von 30 bis 55 °C erwärmt, falls erforderlich homogenisiert und dann in die Form gepumpt. Der Pumpdruck beträgt im allgemeinen mindestens 20 kPa.

Das erfindungsgemässe Verfahren eignet sich zur Herstellung von Formkörpern aller Art, wird jedoch bevorzugt zur Herstellung von elektrischen Isolatoren verwendet.

Beispiel 1:

90 g Dibutylphthalat werden unter einer trockenen Stickstoffatmosphäre auf 50 °C erwärmt. Dann werden unter Rühren 10 g Dibenzylphenylsulfoniumhexafluoroantimonat zugegeben und weitergerührt, bis sich aller Feststoff gelöst hat. Die Lösung wird unter trockenem Stickstoff gelagert.

Unter Rührung mit einem Vierflügelrührer werden bei einer Temperatur von 40 bis 50°C zu 179,55 g einer Mischung von Bisphenol A- und Bisphenol F-Polyglycidylether (Epoxidzahl der Mischung 5,5 - 5,8 eq/kg) zunächst 19,95 g Polypropylenglykol (Gewichtsmittel des Molekulargewichts Mw = 425) gegeben. Danach werden zu diesem Gemisch langsam 390,00 g Siliciumdioxid zugegeben und das resultierende Gemisch mit Hilfe eines Hochgeschwindigkeitsrührers gut homogenisiert. Schliesslich werden 10,50 g der oben genannten Sulfoniumsalzlösung zugegeben, es wird weitere 5 Minuten bei 40 °C gerührt und Vakuum angelegt, um die Mischung zu entgasen. Die Viskosität der Mischung beträgt bei 40 °C 23288 mPa s, ihre Gelzeit bei 100 °C 159 Sekunden und ihre gesamte Härtungsenthalpie 163 J/g.

Zur Messung elektrischer und mechanischer Eigenschaften werden 8 Portionen einer entsprechend der obigen Vorschrift hergestellten entgasten Mischung in Formen der Abmessungen 200 mm x 200 mm x 4 mm sowie 135 mm x 135 mm x 2 mm gefüllt. Jede der 8 Portionen wird nach einem in Tabelle 1 näher beschriebenen Härtungsplan gehärtet.

Tabelle 1

| Probennummer | Härtungsplan |
|---|---|
| 1 | 2 Minuten/100 °C |
| 2 | 4 Minuten/100 °C |
| 3 | 6 Minuten/100 °C |
| 4 | 10 Minuten/100 °C |
| 5 | 20 Minuten/100 °C |
| 6 | 60 Minuten/100 °C |
| 7 | 60 Minuten/100 °C + 6 Stunden/120 °C |
| 8 | 60 Minuten/100 °C + 12 Stunden/120 °C |

Ohne eine weitere Härtung werden die Proben untersucht und die in den nachfogenden Tabellen 2-A und Tabelle 2-B angegebenen Eigenschaften gefunden.

Tabelle 2-A

| Probennummer | 1 | 2 | 3 | 4 |
|---|---|---|---|---|
| Restenthalpie für vollständige Härtung [J/g] | 31 | 23 | 11 | 9,4 |
| Tg-Wert [°C] | 93 | 88 | 87 | 92 |
| Biegefestigkeit gemäss ISO 178 [MPa] | 142 | 139 | 123 | 123 |
| Elastizitätsmodul gemäss ISO 178 [MPa] | 11741 | 12152 | 11639 | 10884 |
| Bruchdehnung (Biegeversuch ISO 178) [%] | 1,6 | 1,5 | 1,3 | 1,3 |
| Zugfestigkeit gemäss ISO R 527 [MPa] | 67 | 74 | 75 | n. b. |
| Zugmodul gemäss ISO R 527 [MPa] | 10830 | 11076 | 11141 | n. b. |
| Bruchdehnung (Zugversuch ISO R 527) [%] | 0,85 | 1,1 | 1,1 | n. b. |
| K1C [MPa $m^{1/2}$] gemäss CG 216-0/89 | 2,23 | 2,25 | 2,15 | 2,06 |
| G1C [$J/m^2$] gemäss CG 216-0/89 | 384 | 379 | 364 | 354 |
| Verlustfaktor bei 25 °C gemäss IEC 250 [%] | n. b. | 1,4 | 1,4 | 0,8 |
| Dielektrizitätskonstante bei 25 °C (IEC 250) | n.b. | 4,1 | 4,0 | 4,0 |

Tabelle 2-B

| Probennummer | 5 | 6 | 7 | 8 |
|---|---|---|---|---|
| Restenthalpie für vollständige Härtung [J/g] | 2,9 | 0 | 0 | 0 |
| Tg-Wert [°C] | 92 | 91 | 90 | 90 |
| Biegefestigkeit gemäss ISO 178 [MPa] | 120 | 121 | 116 | 130 |
| Elastizitätsmodul gemäss ISO 178 [MPa] | 11116 | 11115 | 11686 | 11733 |
| Bruchdehnung (Biegeversuch ISO 178) [%] | 1,3 | 1,3 | 1,2 | 1,3 |
| Zugfestigkeit gemäss ISO R 527 [MPa] | 74 | 70 | 77 | 72 |
| Zugmodul gemäss ISO R 527 [MPa] | 10804 | 10761 | 10909 | 10663 |
| Bruchdehnung (Zugversuch ISO R 527) [%] | 1,0 | 0,9 | 1,0 | 0,9 |
| K1C [MPa $m^{1/2}$] gemäss CG 216-0/89 | 2,06 | 2,04 | 2,06 | 1,98 |
| G1C [J/$m^2$] gemäss CG 216-0/89 | 349 | 340 | 329 | 305 |
| Verlustfaktor bei 25 °C gemäss IEC 250 [%] | 0,7 | 0,5 | 0,3 | 0,3 |
| Dielektrizitätskonstante bei 25 °C (IEC 250) | 4,0 | 3,9 | 4,0 | 4,0 |

n. b. = nicht bestimmt

CG-216-0/89: Vorschrift der Ciba-Geigy AG für den Double Torsion Test

Beispiel 2:

7,20 g Dibutylphthalat werden unter einer trockenen Stickstoffatmosphare auf 50 °C erwärmt. Dann werden unter Rühren 0,80 g Dibenzylphenylsulfoniumhexafluoroantimonat zugegeben und weitergerührt, bis sich aller Feststoff gelöst hat. Die Lösung wird unter trockenem Stickstoff gelagert.

Es werden 136,50 g eines Bisphenol A-Polyglycidylethers (Epoxidzahl der Mischung 5,25 - 5,40 eq/kg), 13,50 g eines Diglycidylethers von Polypropylenglykol 400 (Epoxidzahl 3,053,35 eq/kg), 2,00 g γ-Glycidoxypropyltrimethoxysilan sowie 240,00 g Siliciumdioxid homogen vermischt. Schliesslich werden 7,80 g der oben genannten Sulfoniumsalzlösung in die Mischung eingearbeitet. Die Gelzeit der Mischung bei 100 °C beträgt 2,7 Minuten.

Nach einer Härtung von 30 Minuten bei 80 °C, gefolgt von einer Nachhärtung von einer Stunde bei 100 °C und weiteren 2 Stunden bei 140 °C, hat das Material die in der Tabelle 3 angegebenen Eigenschaften.

Tabelle 3

| | |
|---|---|
| Tg-Wert [°C] | 92 |
| Biegefestigkeit gemäss ISO 178 [MPa] | 112 |
| Elastizitätsmodul gemäss ISO 178 [MPa] | 9259 |
| Bruchdehnung (Biegeversuch ISO 178) [%] | 1,4 |
| Zugfestigkeit gemäss ISO R 527 [MPa] | 68 |
| Zugmodul gemäss ISO R 527 [MPa] | 8323 |
| Bruchdehnung (Zugversuch ISO R 527) [%] | 1,1 |
| K1C [MP$am^{1/2}$] gemäss CG 216-0/89 | 1,57 |

Tabelle 3 (fortgesetzt)

| | |
|---|---|
| G1C [J/m$^2$] gemäss CG 216-0/89 | 242 |
| Verlustfaktor bei 25 °C gemäss IEC 250 [%] | 0,7 |
| Dielektrizitätskonstante (Permittivity) bei 25 °C (IEC 250) | 4,0 |

Beispiel 3:

315 g Dibutylphthalat werden unter einer trockenen Stickstoffatmosphäre auf 50 °C erwärmt. Dann werden unter Rühren 35 g Dibenzylphenylsulfoniumhexafluoroantimonat zugegeben und weitergerührt, bis sich aller Feststoff gelöst hat. Die Lösung wird unter trockenem Stickstoff gelagert.

Unter Rührung werden bei einer Temperatur von 40 bis 50 °C in einem Vogel (VHMA 35) Mixer zu 4488,75 g einer Mischung von Bisphenol A- und Bisphenol F-Polyglycidylether (Epoxidzahl der Mischung 5,5 - 5,8 eq/kg) zunächst 498,75 g Polypropylenglykol (Gewichtsmittel des Molekulargewichts Mw = 425) gegeben. Danach werden zu diesem Gemisch langsam 8250,00 g Siliciumdioxid und 1500,00 g gemahlene Glasfasern zugegeben und das resultierende Gemisch gut homogenisiert. Schliesslich werden 262,50 g der oben genannten Sulfoniumsalzlösung zugegeben, es wird weitere 105 Minuten bei 40 °C unter Vakuum gerührt.

Mit Hilfe der automatischen Druckgeliertechnik werden unter Verwendung der erhaltenen Mischung fünf Elektroisolatoren (Siemens Type A) mit einem Durchmesser von 7,5 cm und einer Länge von 21 cm hergestellt. Die Form (Form-Typ: Siemens-Stützer, Schliesseinheit: Gr. Suter) hat hierbei eine Temperatur von 90 bis 95 °C und wird innerhalb von durchschnittlich 102 Sekunden bei einem Druck von 300 kPa (3 bar) gefüllt. Danach verbleibt das härtende Material noch 10 Minuten in der geschlossenen Form, bevor diese geöffnet und der Formling entnommen wird. Der Isolator wird dann ohne die Form 2 Stunden bei 140 °C nachgehärtet. Mit zwei gedrehten Messingeinsätzen an jedem Ende hat der Isolator ein Gesamtgewicht von ca. 1150 g.

Die Isolatoren weisen eine Umbruchfestigkeit (cantilever strength) nach DIN 48136/68 von 5127 N bei 23 °C auf. Wie eine Röntgenuntersuchung ergibt, zeigen alle Isolatoren keinerlei innere Sprünge, Risse oder sonstige Fehler.

Beispiel 4:

Unter Rührung werden bei einer Temperatur von 40 bis 50 °C in einem Vogel (VHMA 35) Mixer zu 5130,00 g einer Mischung von Bisphenol A- und Bisphenol F-Polyglycidylether (Epoxidzahl der Mischung 5,5 - 5,8 eq/kg) zunächst 570,00 g Polypropylenglycol (Gewichtsmittel des Molekulargewichts Mw = 425) gegeben. Danach werden zu diesem Gemisch langsam 7500,00 g Siliciumdioxid und 1500,00 ggemahlene Glasfasern zugegeben und das resultierende Gemisch gut homogenisiert. Schliesslich werden 300,00 g einer Sulfoniumsalzlösung gemäss Beispiel 1 zugegeben, es wird weitere 120 Minuten bei 40 °C unter Vakuum gerührt.

Mit Hilfe der automatischen Druckgeliertechnik werden unter Verwendung der erhaltenen Mischung wiederum fünf Elektroisolatoren (Siemens Type A) mit einem Durchmesser von 7,5 cm und einer Länge von 21 cm hergestellt. Die Form (Form-Typ: Siemens-Stützer, Schliesseinheit: Gr. Suter) hat hierbei eine Temperatur von 90 bis 95 °C und wird innerhalb von durchschnittlich 107 Sekunden bei einem Druck von 300 kPa (3 bar) gefüllt. Danach verbleibt das härtende Material noch 7 Minuten in der geschlossenen Form, bevor diese geöffnet und der Formling entnommen wird. Der Isolator wird dann ohne die Form 2 Stunden bei 140 °C nachgehärtet. Mit zwei gedrehten Messingeinsätzen an jedem Ende hat der Isolator ein Gesamtgewicht von ca. 1150 g. Die Isolatoren, die wiederum alle keinerlei innere Sprünge, Risse oder sonstige Fehler zeigen, weisen eine Umbruchfestigkeit nach DIN 48136/68 von 4849 N bei 23 °C auf.

Beispiel 5:

472,5 g Dibutylphthalat werden unter einer trockenen Stickstoffatmosphäre auf 50 °C erwärmt. Dann werden unter Rühren 52,5 g Dibenzylphenylsulfoniumhexafluoroantimonat zugegeben und weitergerührt, bis sich aller Feststoff gelöst hat. Die Lösung wird unter trockenem Stickstoff gelagert.

Unter Rührung werden bei einer Temperatur von 40 bis 50 °C in einem Vogel (VHMA 35) Mixer zu 3766,6 g einer Mischung von Bisphenol A- und Bisphenol F-Polyglycidylether (Epoxidzahl der Mischung 5,5 - 5,8 eq/kg) 418,5 g Polypropylenglykol (Gewichtsmittel des Molekulargewichts Mw = 425) gegeben. Weiterhin werden diesem Harzgemisch 465,0 g eines Zähigkeitsvermittlers auf Basis eines Microgels gemäss der unten stehenden Vorschrift, beschrieben in der EP-Anmeldung Nr. 96810812.6, zugegeben. Danach werden zu diesem Gemisch 9750,00 g Siliciumdioxid und 75 g Silan® A-137 und das resultierende Gemisch gut homogenisiert. Schliesslich werden 525,00 g der oben genannten Sulfoniumsalzlösung zugegeben, es wird weitere 105 Minuten bei 40 °C unter Vakuum gerührt.

Mit Hilfe der automatischen Druckgeliertechnik werden unter Verwendung der erhaltenen Mischung fünf Elektroisolatoren (Siemens Type A) mit einem Durchmesser von 7,5 cm und einer Länge von 21 cm hergestellt. Die Form (Form-Typ: Siemens-Stützer, Schliesseinheit: Gr. Suter) hat hierbei eine Temperatur von 90 bis 95 °C und wird innerhalb von durchschnittlich 2 Minuten gefüllt (300 kPa oder 3 bar Druck). Danach verbleibt das härtende Material noch 10 Minuten in der geschlossenen Form, bevor diese geöffnet und der Formling entnommen wird. Der Isolator wird dann ohne die Form 2 Stunden bei 140 °C nachgehärtet. Mit zwei gedrehten Messingeinsätzen an jedem Ende hat der Isolator ein Gesamtgewicht von ca. 1150 g.

Die Isolatoren weisen eine Umbruchfestigkeit (cantilever strength) nach DIN 48136/68 von 6756 N bei 23 °C auf. Wie eine Röntgenuntersuchung ergibt, zeigen alle Isolatoren keine inneren Sprünge, Risse oder sonstige Fehler.

Herstellung des verwendeten Zähigkeitsvermittlers:

76,8 g Polybutadienlatex (Baystal® S Polybutadien 2004, Bayer AG) mit einem Festkörpergehalt von 59 Gew.-% und 148,2 g deionisiertes Wasser werden in einem 350 ml Sulfierkolben, der mit Glasankerrührer, Thermometer, Gasanschluss und zwei Dosierungsanschlüssen ausgerüstet ist, unter Stickstoff vorgelegt und gerührt. Das Gemisch wird auf 80°C (Innentemperatur) aufgeheizt. Die folgende Monomermischung und Initiator/Emulgatorlösung werden während 1,25 h zudosiert:

| Monomermischung | | Initiator/Emulgatorlösung | |
|---|---|---|---|
| MMA[1)] | 35,55 g | APS[4)] | 0,45 g |
| EGDMA[2)] | 2,7 g | SDS[5)] | 1,5 g |
| Bisomer ® PPM6E[3)] | 6,75 g | Di Wasser[6)] | 45 g |

1) Methylmethacrylat;
2) Ethylenglycoldimethacrylat;
3) Polypropylenglycolmonomethacrylat mit durchschnittlich 6 Propylenglycoleinheiten (British Petroleum);
4) Ammoniumpersulfat;
5) Natriumdodecylsulfat;
6) deionisiertes Wasser

Nach der Zugabe wird während weiteren 4,75 Stunden bei 80°C nachgerührt und polymerisiert. Die Reaktionsemulsion wird dann auf Raumtemperatur (RT) abgekühlt und durch ein Papierfilter filtriert. Festkörpergehalt: 28,3 Gew.-%. Mengenanteil der Vernetzungskomponente in der Schale: 6 Gew.-%. Zum Einsatz wird der Zähigkeitsvermittler in der gewünschten Menge mit dem Harz vermischt, danach wird das im Gemisch enthaltene Wasser mit Hilfe eines Rotationsverdampfers im Hochvakuum (ca. 70°C Badtemperatur) entfernt.

## Patentansprüche

**1.** Verfahren zur Herstellung eines Formkörpers mit Hilfe der automatischen Druckgeliertechnik, bei dem eine härtbare Zusammensetzung, die zumindest eine Epoxidverbindung mit durchschnittlich mehr als einer Epoxidgruppe pro Molekül und einen Initiator für die kationische Polymerisation enthält, auf eine Temperatur von 30 bis 55 °C erwärmt und in eine Form eingebracht wird, die eine Temperatur von 80 bis 120°C aufweist, die hoch genug ist, um eine thermische Härtung der Zusammensetzung einzuleiten, und die Zusammensetzung unter Härtung so lange in dieser Form verbleibt, bis der Formkörper so weit verfestigt ist, dass er entformt werden kann, wobei während der Härtung des Formkörpers ständig unter Druck so viel der härtbaren Zusammensetzung in die Form nachgeführt wird, dass die Schrumpfung der härtenden Zusammensetzung ausgeglichen wird und wobei die härtbare Zusammensetzung als Initiator für die kationische Polymerisation mindestens eine Verbindung enthält, ausgewählt aus:

a) Sulfoniumverbindungen der Anionen $PF_6^-$, $AsF_6^-$, $SbF_6^-$, $BiF_6^-$und der von diesen Anionen abgeleiteten Derivate, worin zumindest ein Fluoratom durch eine Hydroxylgruppe ersetzt ist, sowie des Anions $CF_3SO_3^-$, wobei die Sulfoniumverbindungen mindestens eine mit dem Schwefelatom verbundene Alkylgruppe mit 1 bis 12 Kohlenstoffatomen, Cycloalkylgruppe mit 3 bis 8 Kohlenstoffatomen, (Cycloalkyl)alkylgruppe mit 4 bis 10 Kohlenstoffatomen oder Aralkylgruppe mit 7 bis 15 Kohlenstoffatomen aufweisen, sowie
b) Verbindungen der Formel (I)

$$[M^{+n}(L)_x]^{n+}\ n\ X^-$$ (I),

worin

- n gleich 2 oder 3 ist,
- M ein Metallkation ausgewählt aus der Gruppe bestehend aus $Zn^{2+}$, $Mg^{2+}$, $Fe^{2+}$, $Co^{2+}$, $Ni^{2+}$, $Cr^{2+}$, $Ru^{2+}$, $Mn^{2+}$, $Sn^{2+}$, $VO^{2+}$, $Fe^{3+}$, $Al^{3+}$ und $Co^{3+}$ darstellt,
- $X^-$ ein Anion ist, das ausgewählt wird aus der Gruppe bestehend aus $PF_6^-$, $AsF_6^-$, $SbF_6^-$, $BiF_6^-$, von diesen Anionen abgeleiteten Derivaten, worin zumindest ein Fluoratom durch eine Hydroxylgruppe ersetzt ist, und $CF_3SO_3^-$, oder worin bis zu 50 % der Anionen $X^-$, bezogen auf die Gesamtmenge der Anionen, auch beliebige Anionen sein können,
- L Wasser oder ein organischer σ-Donorligand ist, der als Ligandenstellen ein oder mehrere funktionelle Reste ausgewählt aus der Gruppe bestehend aus -CO-, -CO-O-, -O-CO-O- oder -O- aufweist, und der über das Sauerstoffatom oder über die Sauerstoffatome mit dem Zentralatom σ-Bindungen ausbildet und
- x eine ganze Zahl von 0 bis 6 bedeutet, und

wobei die Liganden L im Rahmen der gegebenen Definitionen unterschiedlich sein können.

**2.** Verfahren nach Anspruch 1, dadurch gekennzeichnet, dass die Temperatur der Form 85 bis 100 °C beträgt.

**3.** Verfahren nach Anspruch 1 oder 2, dadurch gekennzeichnet, dass die Mischung 1 bis 10 Minuten in der Form verbleibt.

**4.** Verfahren nach Anspruch 3, dadurch gekennzeichnet, dass die Mischung 3 bis 8 Minuten in der Form verbleibt.

**5.** Verfahren nach einem der Ansprüche 1 bis 4, dadurch gekennzeichnet, dass der Formkörper nach der Entformung einer thermischen Nachhärtung unterzogen wird.

**6.** Verfahren nach Anspruch 5, dadurch gekennzeichnet, das die Nachhärtung bei einer Temperatur von 120 bis 200 °C und während maximal 5 Stunden erfolgt.

**7.** Verfahren nach Anspruch 5 oder 6, dadurch gekennzeichnet, dass die Nachhärtung bei einer Temperatur von 130 bis 150 °C erfolgt.

**8.** Verfahren nach einem der Ansprüche 5 bis 7, dadurch gekennzeichnet, dass die Nachhärtung während 0,5 bis 2 Stunden erfolgt.

**9.** Verfahren nach einem der Ansprüche 1 bis 8, dadurch gekennzeichnet, dass als Initiator für die kationische Polymerisation eine Verbindung der Formel (I) in Form einer Lösung von Zinktetrafluoroborat in Tetrahydrofurfurylalkohol eingesetzt wird.

**10.** Verfahren nach einem der Ansprüche 1 bis 8, dadurch gekennzeichnet, dass als Initiator für die kationische Polymerisation ein Alkyl- oder Aralkylsulfoniumsalz eingesetzt wird.

**11.** Verfahren nach Anspruch 10, dadurch gekennzeichnet, dass das Sulfoniumsalz die Formel (II) oder (III) aufweist

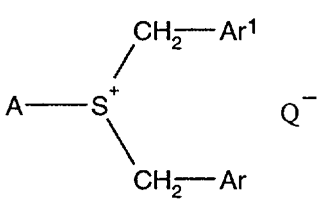 (II)

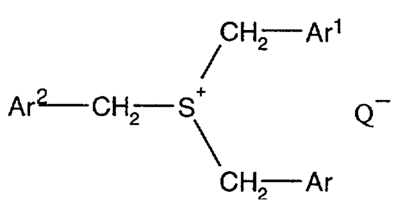 (III),

worin

A für eine Gruppe ausgewählt aus C1-C12-Alkyl, $C_3$-$C_8$-Cycloalkyl, $C_4$-$C_{10}$-(Cycloalkyl)alkyl, unsubstituiertes Phenyl oder durch $C_1$-$C_8$-Alkyl, $C_1$-$C_4$-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht;
Ar, $Ar_1$ und $Ar_2$ unabhängig voneinander je ein unsubstituiertes Phenyl oder Naphthyl oder durch $C_1$-$C_8$-Alkyl, $C_1$-$C_4$-Alkoxy, Halogen, Hydroxy, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder Naphthyl bedeuten und
$Q^-$ für $SbF_6^-$, $AsF_6^-$ oder $SbF_5OH^-$ steht.

**12.** Verfahren nach Anspruch 11, dadurch gekennzeichnet, dass das Sulfoniumsalz Dibenzyl-phenyl-sulfoniumhexafluoroantimonat ist.

**13.** Verfahren nach einem der Ansprüche 1 bis 12, dadurch gekennzeichnet, dass die härtbare Zusammensetzung mindestens einen Diglycidylether auf Basis von Bisphenol A und/oder Bisphenol F enthält.

**14.** Verfahren nach einem der Ansprüche 1 bis 13, dadurch gekennzeichnet, dass die härtbare Zusammensetzung mindestens ein cycloaliphatisches Epoxidharz enthält.

**15.** Verfahren nach einem der Ansprüche 1 bis 14, dadurch gekennzeichnet, dass die härtbare Zusammensetzung zusätzlich Füllstoffe in einer Menge von 30 bis 75 Gew.-%, bevorzugt von 50 bis 75 Gew.-%, bezogen auf die Gesamtmenge der Epoxidzusammensetzung, enthält.

**16.** Verwendung eines Verfahrens nach einem der Ansprüche 1 bis 15 zur Herstellung von elektrischen Isolatoren.